Europäisches Patentamt

European Patent Office

Office européen des brevets

(19)

(11) **EP 0 473 152 B1**

(12) **EUROPEAN PATENT SPECIFICATION**

(45) Date of publication and mention
of the grant of the patent:
**27.10.1999 Bulletin 1999/43**

(51) Int Cl.[6]: **G06T 17/20**

(21) Application number: **91114532.4**

(22) Date of filing: **28.08.1991**

(54) **Topographical data construction system**

Topographisches Datenaufbausystem

Système de construction de données topographiques

(84) Designated Contracting States:
**DE FR GB**

(30) Priority: **28.08.1990 JP 22605090**

(43) Date of publication of application:
**04.03.1992 Bulletin 1992/10**

(73) Proprietor: **SONY CORPORATION**
**Tokyo (JP)**

(72) Inventor: **Oka, Masaaki**
**Shinagawa-ku Tokyo (JP)**

(74) Representative: **Melzer, Wolfgang, Dipl.-Ing. et al**
**Patentanwälte Mitscherlich & Partner,**
**Postfach 33 06 09**
**80066 München (DE)**

(56) References cited:
**FR-A- 2 610 752**

- **COMMUNICATIONS OF THE ASSOCIATION FOR COMPUTING MACHINERY. vol. 25, no. 6, June 1982, NEW YORK US pages 371 - 384 FOURNIER E.A. 'COMPUTER RENDERING OF STOCHASTIC MODELS'**
- **COMPUTER GRAPHICS vol. 23, no. 3, July 1989, NEW-YORK NY US pages 41 - 50 , XP255787 MUSGRAVE E.A. 'THE SYNTHESIS AND RENDERING OF ERODED FRACTAL TERRAINS'**
- **PROCEEDINGS OF THE 1983 INTERNATIONAL CONFERENCE ON PARALLEL PROCESSING 23 August 1983, NEW-YORK NY US pages 261 - 268 STEPOWAY E.A. 'AN ARCHITECTURE FOR EFFICIENT GENERATION OF FRACTAL SURFACES'**

## Description

BACKGROUND OF THE INVENTION

The present invention relates to a topographical data construction system, and more particularly to a topographical data construction system which constructs topographical data representing geographical contours as a coast line, for example.

Heretofore, there is known a three dimensional special effect system which altitude data is added to two dimensional topographical data inputted through a television camera or the like, for example, and thereby undulations are added to the two dimensional configuration represented by the topographical data to produce three dimensional topographical data.

In practice, in the three dimensional special effect system, the overall configuration is made close to the actual configuration by sequentially inputting actual altitude data by an operator.

In the three dimensional special effect system which constructs three dimensional topographical data in such a fashion, input operation of the altitude data must be repeated, and hence is laborious.

On the other hand, there is a technique to deform surfaces represented by two dimensional topographical data according to the operator's input (Japanese Patent Application laid open No. 62 (1987) - 106577. Three dimensional configurations constructed in such a manner has a problem in that they are as a whole smooth and hence poor in reality.

As one method to solve this problem, it is considered that three dimensional topographical data is constructed using fractal technique.

From "Communications of the Association for Computing Machinery", Vol. 25, No. 6, June 1982, New York, US, pages 371 - 384, Fournier E.A. "Computer Rendering of Stochastic Models" it is gererally known to model objects as sample parts of stochastic processes to solve the problem of generating realistic pictures by computers to represent natural irregular objects and phenomenon without undue time or space overhead.

From Computer Graphics, Vol. 23, No. 3, July 1989, New York, US, pages 41 - 50, XP 255787, Musgrave E.A."The Synthesis and Rendering of Eroded Fractal Terrains" a general approach to the synthesis of fractal terrrain height fields is known, which, in contrast to other known technics, features locally independent control of the frequency composing the surface, and thus local control of fractal dimension and other statistical characteristics.

However, there is a problem that provides a poor reality when portions representing contours in a configuration exist as coastline.

SUMMARY OF THE INVENTION

In view of the foregoing, an object of the present invention is to provide topographical data construction system which is capable of constructing a configuration which provides a natural impression, with an easy operation.

The foregoing object and other objects of the invention have been achieved by the provision of a topographical data construction system in which altitude data is constructed on the basis of two dimensional topographical data, and three dimensional topographical data is constructed on the basis of the two dimensional topographical data as constructed and the altitude data. The topographical data construction system further comprises

inputting means for inputting altitude data corresponding to a plurality of optional representative points of a topography which is represented by two dimensional topographical data; division point setting means for setting division points between the adjacent representative points of the plurality of representative points; deviation setting means for setting a deviation on the basis of a distance from the division points to the representative points adjacent to the division points; constructing means for constructing data to indicate the height of the division points using a random number function on the basis of a data representing the height of the adjacent point and the deviation; correcting means for correcting the data to indicate the height of the division points on the basis of data representative of a border between land and sea, wherein the correcting means sets the height data of the division points lying in the sea to the height data of the sea level.

The nature, principle and utility of the invention will become more apparent from the following detailed description when read in conjunction with the accompanying drawings in which like parts are designated by like reference numerals or characters.

BRIEF DESCRIPTION OF THE DRAWINGS

In the accompanying drawings:

FIG. 1 is a block diagram illustrating the topographical data construction system according to one embodiment of the present invention;
FIG. 2 is a flow chart illustrating the operation of the topographical data construction system shown FIG. 1;
FIG. 3 is a diagramatic view describing the two dimensional topographical data used with the topographical data constructing system shown FIG. 1;
FIG. 4 is a diagramatic view describing the operation to input the representative points within the topographical data construction system shown FIG. 1;
FIG. 5, FIG. 6 and FIG. 7 are diagramatic views describing first stage processing of intermediate points on the topographical data construction system of FIG. 1;
FIG. 8 is a diagramatic view describing the topographical configuration constructed by fractal technique;

FIG. 9A and FIG. 9B are diagramatic views describing the process of areas submarine with the topographical data construction system shown FIG. 1;

FIG. 10 is a diagramatic view describing the configuration of a coastline on the topography generated by fractal technique;

FIG. 11 is a diagramatic view describing the diference from an actual topography to the configuration generated by fractal technique;

FIG. 12 and FIG. 13 are diagramatic views describing second stage processing of intermediate points on the topographical data construction system of FIG. 1;

FIG. 14 and FIG. 15 are diagramatic views describing final stage processing of intermediate points on the topographical data construction system of FIG. 1;

FIG. 16 is a diagramatic view describing the topographical data constructed with the topographical data constructing system of FIG. 1;

FIG. 17 is a diagramatic view describing a random number generating technique of the topographical data construction system shown FIG. 1 according to the second embodiment of the present invention; and

FIG. 18 is a diagramatic view describing a random number generating technique of the topographical data construction system shown FIG. 1 according to the other embodiment of the present invention.

DETAILED DESCRIPTION OF THE INVENTION

Preferred embodiments of the present invention will be described with reference to the accompanying drawings:

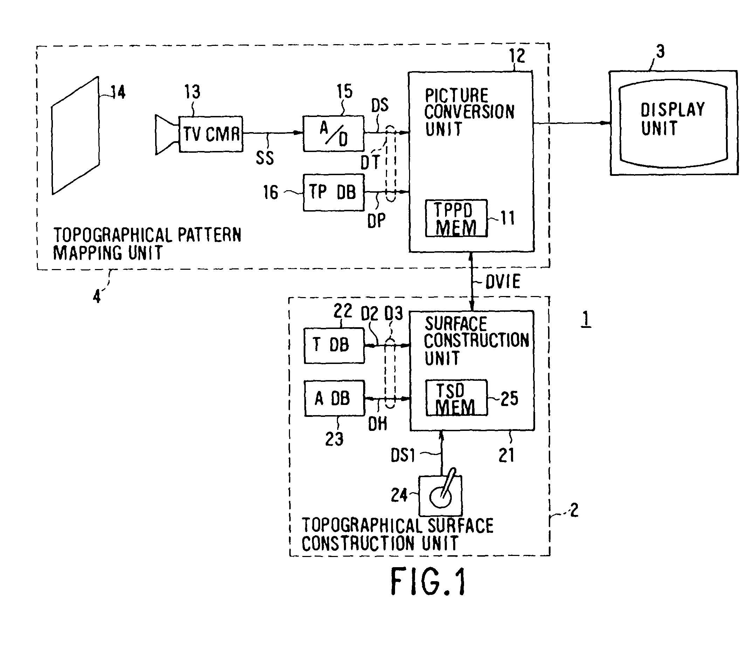

In FIG. 1, 1 generally indicates a stereoscopic topography display system, which includes a topographical surface constructing unit 2 for constructing stereoscopic surfaces representing geographical undulations and a topographical pattern mapping unit 4 for mapping topographical patterns on topographical surfaces constructed by the topographical surface constructing unit 2 and displaying the result on the display unit 3.

The topographical pattern mapping unit 4 is provided with a picture conversion unit 12 which includes a topographical pattern picture data memory 11. In this unit, topographical pattern signals SS which have obtained by picking up a map 14 by a television camera 13 are converted by an analog to digital conversion circuit (A/D) 15 to topographical data DS, which is then stored as topographical pattern picture data DT in the topographical pattern picture data memory 11.

Here, the topographical data DS consists of map information in which indicia, such as contour lines, rivers and coastlines, drawn on the map 14 are expressed on a two dimensional plane.

In this embodiment in addition to the foregoing construction, the topographical pattern mapping unit 4 has a topographical pattern database 16, and is capable of storing picture data DP in the topographical pattern database 16, the picture data DP being similar to the topographical pattern picture data DS obtained at the output terminal of the analog to digital conversion circuit (A/D) 15.

The topographical surface constructing unit 2 has a surface construction unit 21, which constructs height data DH on the basis of two dimensional topographical data D2 stored in a topographical database 22, and stores the height data DH in an altitude database 23.

In this manner, the topographical surface constructing unit 2 constructs three dimensional topographical data D3 on the basis of the two dimensional topographical data D2 and height data DH stored in the topographical database 22 and the altitude database 23, respectively. Undulations are provided to the topographical data DS stored in the topographical pattern picture data memory 11 based on the three dimensional topographical data D3.

More specifically, the topographical surface constructing unit 2 constructs topographical surfaces on the basis of the three dimensional topographical data D3. For example, the topographical surface constructing unit 2 stores topographical surface data DVIE in a topographical surface data memory 25, the topographical surface data DVIE being similar to a topographical surface viewed from a visual point indicated by visual point data DSI inputted from a visual point setting data input means 24 consisting of a joystick, for example.

Thus, the topographical surface constructing unit 2 outputs topographical surface data DVIE stored in the topographical surface data memory 25 to the topographical pattern mapping unit 4, where topographical data DS is mapped by applying a technique disclosed in Japanese Patent laid open application No. 58(1983)-19975, for example.

This enables topographical patterns to be three-dimensionally displayed on the basis of the three dimensional topographical data D3 constructed in the topographical surface constructing unit 2.

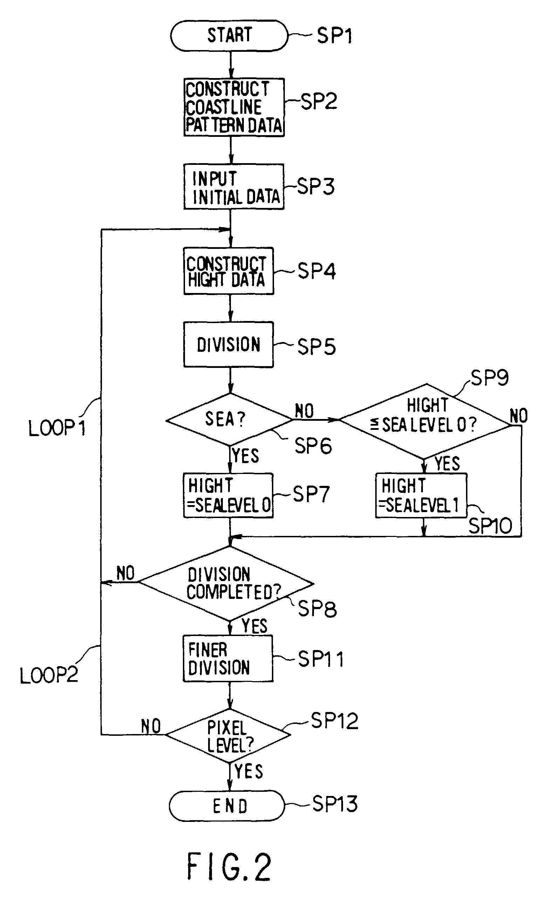

Here, the topographical surface constructing unit 2 constructs the three dimensional topographical data D3 by executing the routine shown in FIG. 2.

More specifically, when topographical pattern picture data DT is read in the topographical pattern mapping unit 4, the topographical surface constructing unit 2 reads in two dimensional topographical data D2 by going from the step SP1 to the step SP2.

Here, the stereoscopic topography display system 1 constructs a display picture of the map on the display unit 3 on the basis of the topographical pattern picture data DT accepted as well as displays a predetermined cursor on the display picture.

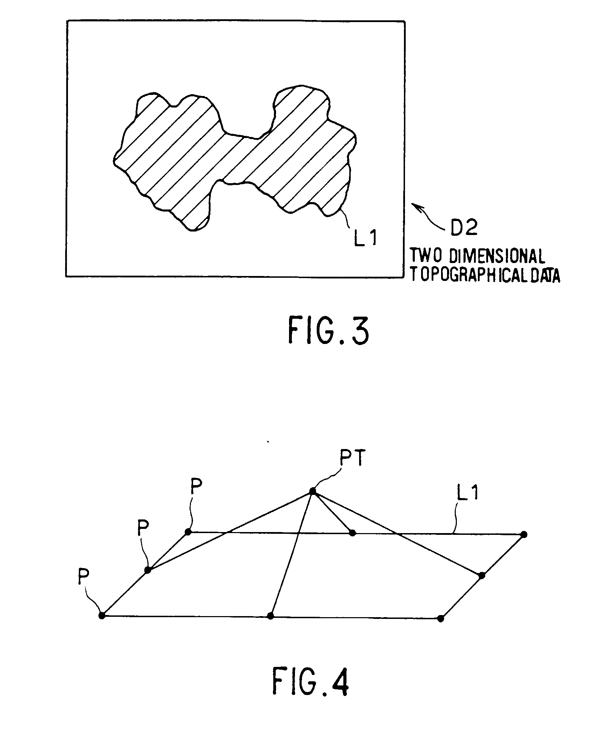

In this manner, as shown in FIG. 3 the topographical surface constructing unit 2 reads in coordinate data of coastline L1 sequentially inputted by moving the cursor, observing the displayed picture, and stores it as two dimensional topographical data D2 in the topographical database 22.

Furthermore, in this even the topographical surface constructing unit 2 constructs a coastline pattern data and stores it in the topographical database 22, the coastline pattern memory being such that in a two dimensional topography constructed on two dimensional topographical data D2 by the operator's input, the land (which is an area hatched in FIG. 3) and the sea are made discriminable through the coastline L1.

In constructing three dimension topographical data by applying the fractal technique in this embodiment, the height data DH is corrected using the coastline pattern memory every time the height data DH is constructed, and thereby a three dimensional topography similar to the actual topography is formed.

That is, the topographical surface constructing unit 2 goes to the step SP3, where an initial value of the height data DH is inputted.

As diagrammatically illustrated in FIG. 4, the operator indicates positions of a top PT of a mountain and the like by moving the cursor, eye observing the map displayed on the display unit 3, and thereby inputs the height of the indicated position. This accomplishes the input of the initial value.

Thus, the topographical surface constructing unit 2 reads in the height data DH of several points (hereinafter referred to as representative points as well as coastline) indicated by the operator, and constructs sequentially height data DH referring to the height data DH of the representative points P.

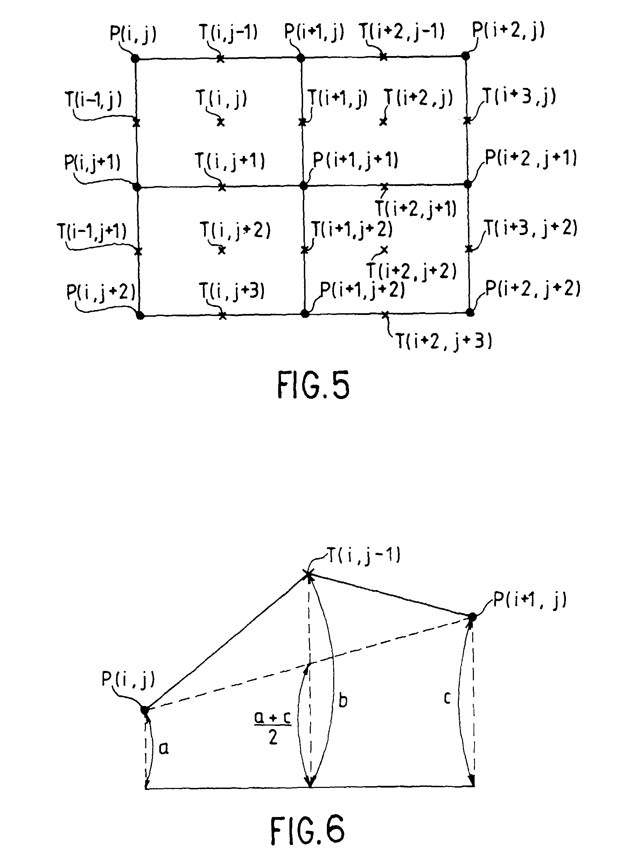

Then, the topographical surface constructing unit 2 goes to the step SP4, where as shown in FIG. 5, in a two dimensional configuration represented by two dimensional topographical data, an intermediate point T (in this embodiment hereinafter referred to as intermediate point and indicated by x marks) which divides the interval between adjacent representative points P (hereinafter indicated by black circles) is set.

In this case, the topographical surface constructing unit 2 sets an intermediate point T(i, j-1) between representative points P(i, j) and P(i+1, j).

Subsequently, the topographical surface constructing unit 2 goes to the step SP5, where height data DH of the intermediate point T(i, j-1) is constructed.

Here, as illustrated in FIG. 6 the topographical surface constructing unit 2 obtains an average value (a + c)/2 of altitudes a and c of the representative points P (i, j) and P(i+1, j), and then height data DH representing the altitude b of the intermediate point T(i, j-1) is constructed by carrying out operation expressed by the following equation:

$$b = \text{gauss random } \left(\frac{a+c}{2} \text{ } k\cdot 2^{-ih}\right) \tag{1}$$

where the gauss random represents Gaussian distribution random number. In this case, there is produced altitude data b of generation probability such that the altitude of the largest generation frequency has the average value $(a + c)/2$ and the standard deviation is $k\cdot 2^{-ih}$ with a center of the average value $(a + c)/2$.

Furthermore, the i represents the number of repetition of the division, and in this case the i equals 1.

The k and h represent predetermined coefficients set by the operator.

The topographical surface constructing unit 2 obtains mean values of height data DH between vertical representative points P(i, j) and P(i, j+1); P(i+1, j) and P (i+1, j+1) in intermediate points T(i-1, j) and T(i+1, j), respectively, and constructs height data DH of generation probability of which standard deviation is $k\cdot 2^{-ih}$ with a center of the corresponding mean values.

On the other hand, the topographical surface constructing unit 2 obtains mean values of height data DH between horizontal representative points P(i, j) and P(i+1, j); P(i, j+1) and P(i+1, j+1) in intermediate points T(i, j-1) and T(i, j+1), respectively, and constructs height data DH of generation probability of which standard deviation is $k\cdot 2^{-ih}$ with a center of the corresponding mean values.

Further, in the intermediate point T(i, j) which is a center of the representative points P(i, j), P(i, j+1), P(i+1, j) and P(i+1, j+1), a mean value of the height data DH of the representative points P(i, j), P(i, j+1), P(i+1, j) and P(i+1, j+1) is obtained, and height data DH of generation probability of which standard deviation is $k\cdot 2^{-ih}$ with a center of the mean value is constructed.

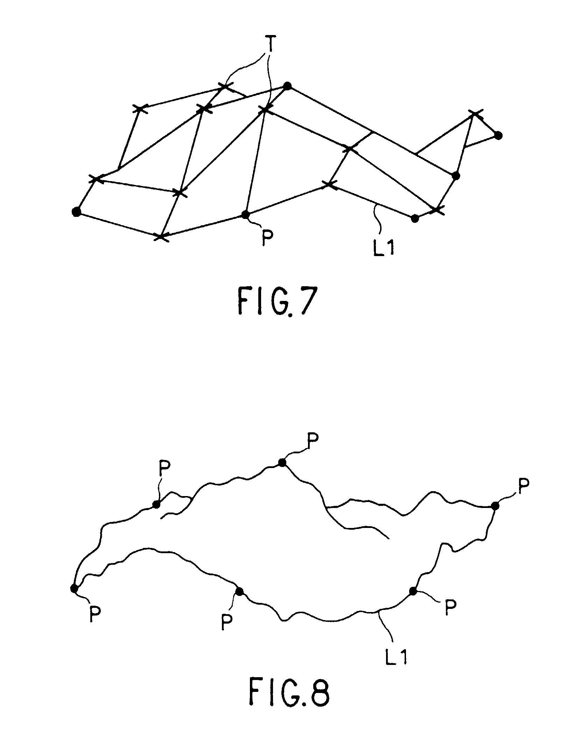

As illustrated in FIG. 7, regarding the intermediate points T between representative points P of which height data DH has been obtained, deviations are set according to intervals between representative points P, and random number data is constructed on the basis of the deviation with reference to the height data DH of each representative point P. The height data DH is constructed based on the random number data.

After the setting of the intermediate points T and the construction of the height data DH are completed about all the representative point P, the construction of the height data DH may be repeated by adding the intermediate points T to the representative points P. This enables two dimensional plane height data DH to be sequentially produced from the coastline and height data DH of the initial value, and hence three dimensional topographical data can be constructed with ease.

Furthermore, in this event the value of i of the equation (1) is renewed every time this repetition is made so that the deviation is set as small as possible.

When in this fashion small portions in a three dimensional configuration represented by three dimensional topographical data are enlarged at a magnification, they are statistically constructed to make the same change as the whole configuration, and it is hence understood that as illustrated in FIG. 8, topographical data can be produced by applying fractal technique.

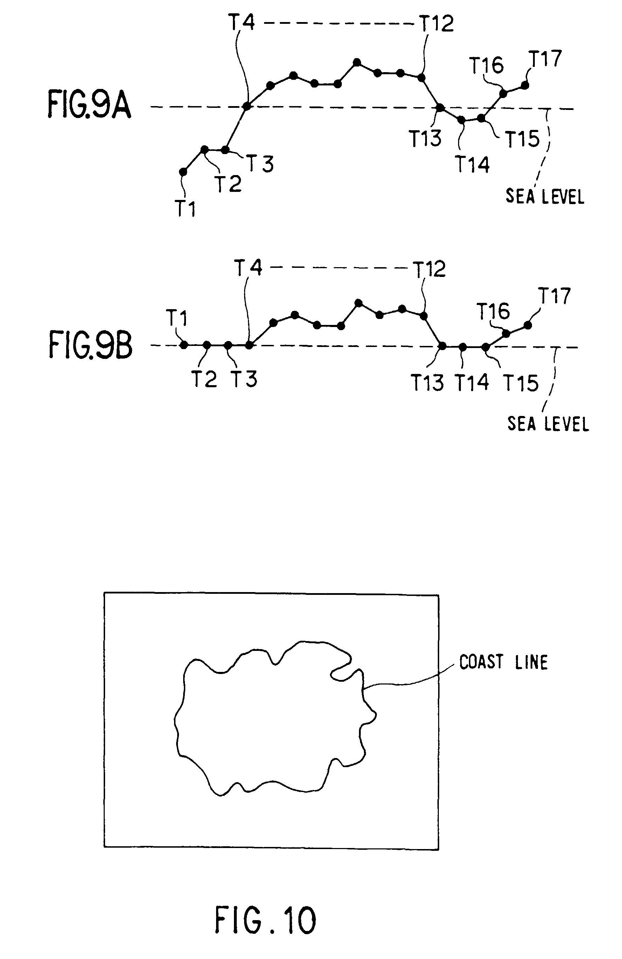

In the three dimensional topography constructed in such a fashion it is inevitable that in a land in the vicinity of a coastline as shown in FIG. 9, areas below sea level are produced (in FIG. 9A) as indicated by characters T1, T2, T3, T14 and T15).

In this case, the height data DH of those areas may be corrected to the height data DH of the sea level (FIG. 9B). This enables the coastline as illustrated in FIG. 10 to be formed, and thus the three dimensional topography can be constructed.

However in this case, a coastline which is different from the actual coastline L1 (FIG. 3) is constructed, and as a result, only a configuration which is different from the actual geographical features is constructed with poor reality.

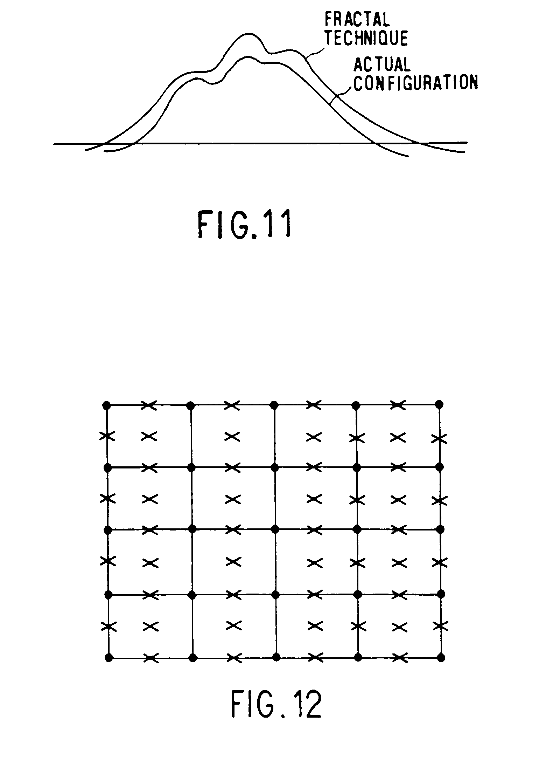

In a case where altitude data is constructed on the coastline and the height data DH of the initial data, as shown in FIG. 11 the overall topography is constructed similarly to the actual configuration. On the contrary, it is noted that the coastline is formed at a rather different position when the coastline position in a section at a sea level is observed.

For this reason, in this embodiment the height data DH is corrected referring to the coastline pattern memory every time when the height data DH of each intermediate point T is constructed, and thereby three dimensional topographical data which is similar to the actual configuration is constructed.

More specifically, after the topographical surface constructing unit 2 constructs height data DH of each intermediate point T, it goes to the step SP6 (in FIG. 2), where it is judged by referring to the coastline pattern memory whether or not the intermediate point T is in the sea.

When an affirmative result is obtained here, the topographical surface constructing unit 2 goes to the step SP7, where the height data DH of the intermediate point T which is in the sea is corrected to the height data DH of the sea level 0, and then proceeds to the step SP8.

When on the contrary, a negative result is obtained in the step SP6, the topographical surface constructing unit 2 goes to the step SP9 to judge whether or not the height data DH of the intermediate point T is below the sea level.

When an affirmative result is obtained here, the topographical surface constructing unit 2 goes to the step SP10, where the height data DH of the intermediate point T is corrected to the height data DH of the position lowest in the land, and then goes to the step SP8. When on the contrary a negative result is obtained, it directly goes to the step SP8.

Every time when each intermediate point T is set and the height data DH is constructed, in this manner, the topographical surface constructing unit 2 corrects the height data DH referring to the coastline pattern memory.

In the step SP8, the topographical surface constructing unit 2 makes a judgement as to whether or not regarding all the adjacent representative points P setting of intermediate points T and construction of the height data DH thereof are completed. When a negative result is obtained, the topographical surface constructing unit 2 returns to the step SP4, where regarding the subsequent representative point P, setting of the intermediate point T and construction of the height data DH are executed.

Thus, by repeating the loop LOOP 1 consisting of steps SP4, SP5, SP6, SP7, SP8 and SP4, steps SP4, SP5, SP6, SP9, SP10, SP8 and SP4, or steps SP4, SP5, SP6, SP9, SP8 and SP4, setting of intermediate points T between adjacent representative points P is, as described in connection with FIG. 5, sequentially carried out as well as construction of height data DH of the corresponding intermediate points T.

When regarding all the adjacent representative points P, setting of the intermediate points T and construction of height data DH are completed, an affirmative result is obtained in the step SP8, and hence the topographical surface constructing unit 2 goes to the step SP11, where the intermediate point T set is set as representative point P and then, the value i of the equation (1) is increased by 1.

Then, the topographical surface constructing unit 2 goes to the step SP12, in which it is judged whether or not intervals between the adjacent representative points P are equal to the pixel interval. When there is a representative point P which is away larger than the pixel interval, a negative result is obtained, and thus the topographical surface constructing unit 2 returns to the step SP4.

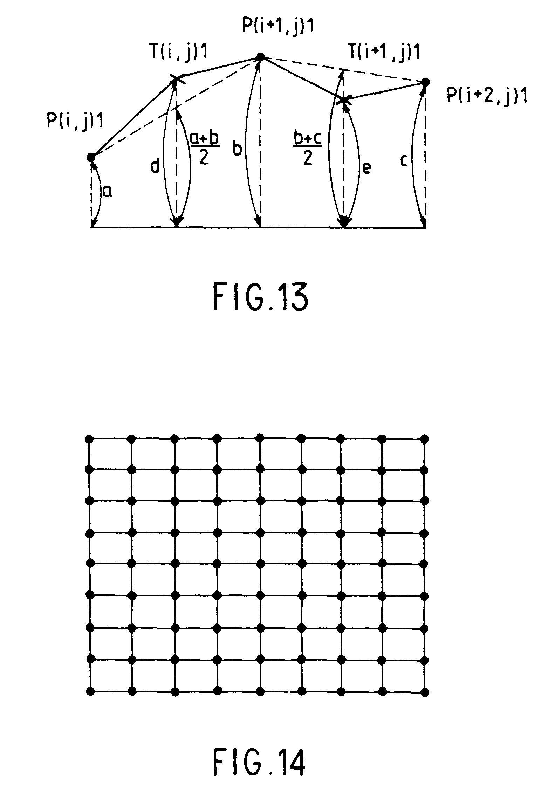

Thus, the topographical surface constructing unit 2 returns to the step SP4 to repeat the loop LOOP 1, and thereby as shown in FIGS. 12 and 13, an intermediate point T is set between representative points P, and construction of altitude data of an intermediate point T is repeated.

In this event, the topographical surface constructing unit 2 constructs height data DH by generating a random number of the equation (1) after the i is increased by 1, and thereby standard deviation is reset according to the interval between representative points P to produce height data DH.

This enables height data DH of the intermediate point T to be constructed by applying fractal technique.

Furthermore, in this event the height data DH is corrected, referring to the coastline pattern memory every time the height data DH is constructed, and based on the corrected height data DH, height data DH of the intermediate point T is constructed again. Thus, in the land in the vicinity of the coastline, height data DH representing a configuration similar to the actual coastline can be constructed, and thereby a three dimensional configuration can be constructed with reality as a whole.

When the resetting of the intermediate point T and the construction of the altitude data are completed, in the step SP8 the topographical surface constructing unit 2 judges whether or not regarding all the adjacent representative points P the resetting of the intermediate point T and the construction of the altitude data DH are completed. When an affirmative result is obtained here, the topographical surface constructing unit 2 goes to the step SP11, where the set intermediate point T is set as the representative point P, and then the i of the equation (1) is increased by 1.

Subsequently, the topographical surface constructing unit 2 goes to the step SP12, in which it is judged whether or not intervals between the adjacent representative points P are equal to the pixel interval. When there is a representative point P which is away larger than the pixel interval, a negative result is obtained, and thus the topographical surface constructing unit 2 returns to the step SP4.

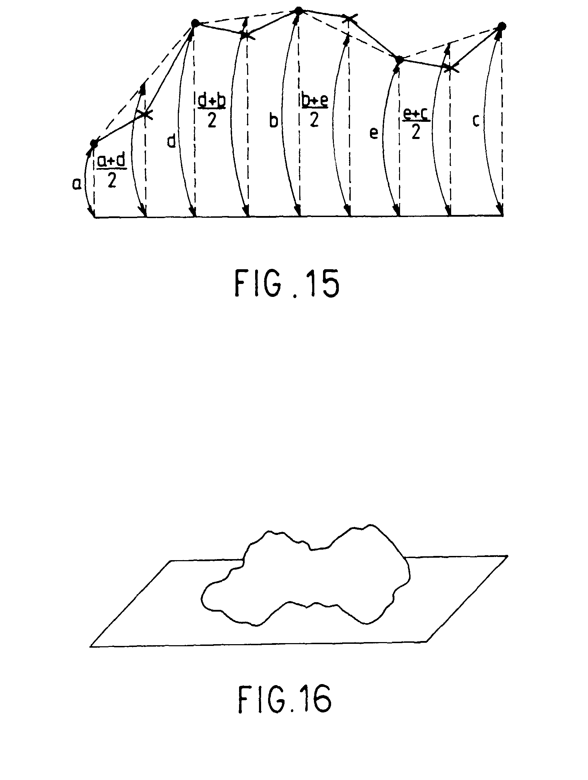

Thus, by repeating the loop LOOP 2 consisting of steps SP11, SP12, loop LOOP 1, and SP11, setting of intermediate points T between adjacent representative points P is carried out as well as construction of height data DH. When height data DH is, as shown in FIGS. 14 and 15, sequentially constructed at the intervals of the pixel, an affirmative result is obtained in the step SP12, and then the topographical surface constructing unit 2 goes to the step SP13, where height data DH is stored in the altitude database 23. Thus, the routine is completed.

Thus, in constructing height data DH by using fractal technique, the height data DH is corrected referring to the coastline pattern memory every time height data DH of the intermediate point T is produced, and thereby height data DH which reflects the features of the actual coastline can be obtained.

Accordingly, as shown in FIG. 16 topographical surfaces with a reality can be constructed on the basis of the three dimensional topographical data and the height data DH.

In the foregoing construction, the topographical surface constructing unit 2 sets the representative points P on the basis of the two dimensional topographical data D2 and the height data DH of the initial value which have been inputted by the operator, and then sequentially sets intermediate points T between the adjacent representative points P as well as constructs height data DH of the intermediate points T.

In this event, the topographical surface constructing unit 2 sets standard deviation according to intervals from the adjacent representative points P, and generates height data DH with a generation probability which has the standard deviation with a center of the mean value of the height data DH of the representative points P.

In the case where an intermediate point T is found in the sea by referring to the coastline pattern memory, in the height data DH constructed, the height data DH of the intermediate point T is corrected to height data DH of sea level 0 On the other hand in the case where the intermediate point T is on the land and the height data DH of the intermediate point T is below the sea level, the height data DH is corrected to height data DH which represents the lowest position in the land.

In this manner height data DH of the intermediate point T between adjacent representative points P is constructed, and the height data DH generated is corrected referring to the coastline pattern memory.

When height data DH of the intermediate point T is obtained in this manner, the intermediate point T is added to the representative points P. Then, another intermediate point T is set between other adjacent representative points P again, and the height data DH of the intermediate point T is constructed.

In the event, the standard deviation is set according to the interval between the adjacent representative points P, and height data DH is produced with reference to the mean value of the height data DH of the representative points P. The height data DH is corrected with reference to the coastline pattern memory.

When the intervals between the representative points P become equal to the interval of the pixels by repeating the setting of the intermediate points T, and construction and correction of the height data DH, the routine is completed by storing the constructed height data DH in the altitude database 23. This enables height data DH to be easily constructed by fractal technique.

Moreover, topographical surface which provide a natural impression can be formed by correcting height data DH constructed with reference to the coastline pattern memory.

Thus, three dimensional topographical data D3 can be constructed by adding the height data DH to two dimensional topographical data D2. Configurations which provide a natural impression can be displayed with ease by displaying the topographical pattern picture data DT mapped on topographical surfaces expressed by the three dimensional topographical data D3.

According to the foregoing construction, three dimensional topography which provides a natural impression can be easily formed by correcting constructed height data DH referring to the coastline pattern memory every time the height data DH is constructed by applying fractal technique.

In the foregoing embodiment, it stated that divisional points are set at intermediate points between adjacent representative points but the present invention is not limited to this. For example, two divisional points, may be set between adjacent two representative points so that the interval between the representative points is divided into three equal parts, and then altitude data may be constructed for each divisional point.

In this case, instead of mean value reference may be made to the altitude of a point which internally divides at a ratio 1/3 : 2/3 between adjacent representative points, and the altitude data is constructed by setting the standard deviation according to distances from each divisional point to adjacent representative points.

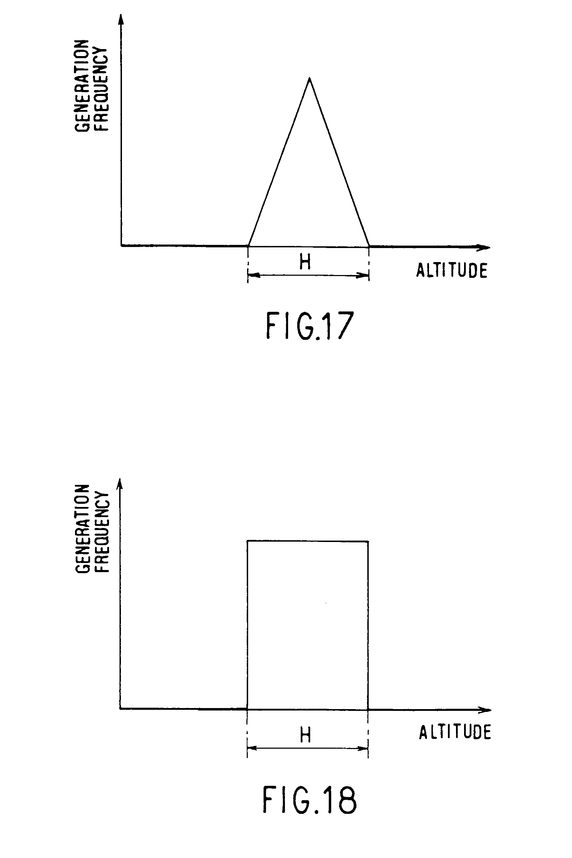

Furthermore in the preceding embodiment, it is described that random number data is constructed using Gaussian distribution random number, and on the basis of the random number the altitude data is constructed. However, the method of producing random number is not limited to this but the random number may be constructed with a generation probability for example as illustrated in FIGS. 17 and 18.

In this case, the deviation may be switched to a deviation represented by the character H.

Furthermore, in the embodiment previously described, it is stated that the altitude data is corrected using the coastline pattern memory which distinguishes land and sea with a coastline interposed. The present invention is not limited to this but may be widely applied to a case where the altitude data is corrected on the basis of a pattern memory of two dimensional topographical data which distinguishes areas other than land and sea.

Further in the foregoing embodiment, the case is described in which two dimensional topographical data is inputted by operator's manual input but the present invention is not restricted to this. For example, an image of a map which have land and sea distinguished with colors may be picked up, and based on the result picked up, two dimensional topographical data may be automatically inputted.

In addition in the embodiment previously described, it was stated that the altitude data is constructed detecting the coastline, but the present invention is not limited to this. The present invention may be widely applied to cases where altitude data is constructed using various references representing configuration such as contour line.

As previously described, the present invention can provide a topographical data construction system which is capable of constructing topography which provides a natural impression with ease by correcting altitude data based on a pattern memory, which distinguishes land and the other areas, every time the altitude data is constructed in constructing three dimensional topographical data using fractal technique.

While there has been described in connection with the preferred embodiments of the invention, it will be obvious to those skilled in the art that various changes and modifications may be made therein without departing from the invention, and it is aimed, therefore, to cover in the appended claims all such changes and modifications as fall within the scope of the invention.

**Claims**

1. A topographical data construction system (1) in which altitude data (DH) is constructed on the basis of two dimensional topographical data (D2), and three dimensional topographical data (D3) is constructed on the basis of the two dimensional topographical data (D2) as constructed and the altitude data (DH), comprising:

   inputting means (24) for inputting altitude data corresponding to a plurality of optional representative points (P) of a topography which is represented by two dimensional topographical data (D2);
   division point setting means (21) for setting division points (T) between the adjacent representative points of the plurality of representative points;
   deviation setting means (21) for setting a deviation on the basis of a distance from the division points (T) to the representative points (P) adjacent to the division points (T);
   constructing means (21) for constructing height data of the division points (T) using a random number function on the basis of a data representing the height of the adjacent point (P) and the deviation; and
   correcting means (21) for correcting the height data of the division points (T) on the basis of data (L1) representative of a border between land and sea, wherein the correcting means (21) sets the height data of the division points (T) lying in the sea to the height data of the sea level.

2. A topographical data construction system according to claim 1, further comprising:
   two dimensional topographical data construction means (21) for constructing two dimensional topographical data from a picture obtained by imaging a map (14).

3. A topographical data construction system according to claim 1, further comprising:
   coastline pattern data construction means constructing data indicating the border between land and sea from the picture obtained by imaging a map.

4. A topographical data construction system according to claim 3, wherein said random number function is expressed by following equation;

$$b = \text{gauss random} \; \frac{a+c}{2} \, k \cdot 2^{-ih}$$

   where, gauss random represents Gaussian distribution random number, i represents the number of repetition of the division, k and h represent coefficients predetermined, and a and c represent the altitude of the adjacent representative points (d').

5. A method for constructing three dimensional topographical data on the basis of two dimensional topographical data (D2) and altitude data (DH) which is constructed on the basis of the two dimensional topographical data comprising steps for:

(a) setting (24) the altitude data (DH) to a plurality of optional representative points (p) respectively indicated by said two dimensional topographical data (22);
(b) setting (21) division points (T) between adjacent representative points (P) of the plurality of representative points (P);
(c) setting (21) a deviation on the basis of a distance from the division points (T) to the representative points (P) adjacent to the division points (T);
(d) constructing height data of the division points (T) using a random number function on the basis of height data of the adjacent points (T) and the deviation;
(e) correcting (21) the height data of the division points (T) on the basis of data indicating a border between land and sea, wherein the correcting means (21) sets the height data of the division points (T) lying in the sea to the height data of the sea level.

6. A method according to claim 5, characterized by repeating from said step (b) to step (e) using said division points as said representative points.

**Patentansprüche**

1. System (1) zum Konstruieren von topographischen Daten, in dem Höhendaten (GH) auf der Basis von zweidimensionalen topographischen Daten (D2) konstruiert werden und auf der Basis der so konstruierten zweidimensionalen topographischen Daten und der Höhendaten (DH) dreidimensionale topographische Daten (D3) konstruiert werden, wobei das System aufweist:

eine Eingabeeinrichtung (24) zur Eingabe von Höhendaten, die einer Mehrzahl von optionalen repräsentativen Punkten (P) einer durch zweidimensionale topographische Daten (D2) dargestellten Topographie entsprechen,
eine Teilungspunkt-Setzeinrichtung (21) zum Setzen von Teilungspunkten (T) zwischen benachbarten repräsentativen Punkten aus der Mehrzahl von repräsentativen Punkten,
eine Abweichungs-Setzeinrichtung (21) zum Setzen einer Abweichung auf der Basis des Abstands von den Teilungspunkten (T) zu den den Teilungspunkten (T) benachbarten repräsentativen Punkten (P),
eine Konstruktionseinrichtung (21) zum Konstruieren von Höhendaten der Teilungspunkte (T) unter Verwendung einer Zufallszahlenfunktion auf der Basis von Daten, die die Höhe der benachbarten Punkte (P) und die Abweichung repräsentieren, und
eine Korrektureinrichtung (21) zum Korrigieren der Höhendaten der Teilungspunkte (T) auf der Basis von Daten (L1), die fur eine Grenze zwischen Land und Meer reprasentativ sind, wobei die Korrektureinrichtung (21) die Höhendaten der Teilungspunkte (T), die in dem Meer liegen, auf die Höhendaten des Meeresspiegels setzt.

2. System zum Konstruieren von topographischen Daten nach Anspruch 1, ferner mit einer Einrichtung (21) zum Konstruieren von zweidimensionalen topographischen Daten aus einem Bild, das durch bilderzeugende Abtastung einer Landkarte gewonnen wird.

3. System zum Konstruieren von topographischen Daten nach Anspruch 1, ferner mit einer Einrichtung zum Konstruieren von die Grenze zwischen Land und Meer angebenden Küstenlinienmusterdaten aus dem durch die bilderzeugende Abtastung einer Landkarte gewonnenen Bild.

4. System zum Konstruieren von topographischen Daten nach Anspruch 3, bei dem die Zufallszahlenfunktion durch folgende Gleichung ausgedrückt wird:

$$b = \text{Gauß-Zufallsfunktion } \frac{a+c}{2}\, k \cdot 2^{-ih}$$

worin der Ausdruck Gauß-Zufallsfunktion eine Gauß'sche Zufallsverteilungszahl, i die Wiederholungszahl der Verteilung, k und h vorbestimmte Koeffizienten und a und c die Höhe der benachbarten repräsentativen Punkte (P) repräsentieren.

5. Verfahren zum Konstruieren von topographischen Daten auf der Basis von zweidimensionalen topographischen Daten (D2) und Hohendaten (DH), die auf der Basis der zweidimensionalen topographischen Daten konstruiert werden, mit den Verfahrensschritten:

(a) Setzen (24) der Höhendaten (DH) für eine Mehrzahl von optionalen repräsentativen Punkten (P), die jeweils durch die zweidimensionalen topographischen Daten (22) angegeben werden,

(b) Setzen (21) von Teilungspunkten (T) zwischen benachbarten repräsentativen Punkten (P) aus der Mehrzahl von repräsentativen Punkten (P),

(c) Setzen (21) einer Abweichung auf der Basis des Abstands von den Teilungspunkten (T) zu den den Teilungspunkten (T) benachbarten repräsentativen Punkten (P),

(d) Konstruieren von Höhendaten der Teilungspunkte (T) unter Verwendung einer Zufallszahlenfunktion auf der Basis von Höhendaten der benachbarten Punkte (P) und der Abweichung,

(e) Korrigieren (21) der Höhendaten der Teilungspunkte (T) auf der Basis von die Grenze zwischen Land und Meer angebenden Daten, wobei die Korrektureinrichtung (21) die Höhendaten der Teilungspunkte (T), die in dem Meer liegen, auf die Höhendaten des Meeresspiegels setzt.

**6.** Verfahren nach Anspruch 5, gekennzeichnet durch das Wiederholen der Schritte (b) bis (e), wobei die genannten Teilungspunkte als die repräsentativen Punkte verwendet werden.

## Revendications

**1.** Système de construction de données topographiques (1) dans lequel des données d'altitude (DH) sont construites sur la base de données topographiques bidimensionnelles (D2), et des données topographiques tridimensionnelles (D3) sont construites sur la base des données topographiques bidimensionnelles (D2) telles que construites et des données d'altitude (DH), comprenant :

un moyen d'entrée (24) pour entrer des données d'altitude correspondant à une pluralité de points représentatifs optionnels (P) d'une topographie qui est représentée par des données topographiques bidimensionnelles (D2) ;

un moyen d'établissement de point de division (21) pour établir des points de division (T) entre les points représentatifs adjacents de la pluralité de points représentatifs ;

un moyen d'établissement de déviation (21) pour établir une déviation sur la base d'une distance depuis les points de division (T) jusqu'aux points représentatifs (P) adjacents aux points de division (T) ;

un moyen de construction (21) pour construire des données de hauteur des points de division (T) en utilisant une fonction de nombre aléatoire sur la base d'une donnée représentant la hauteur du point adjacent (P) et de la déviation ;

et

un moyen de correction (21) pour corriger les données de hauteur des points de division (T) sur la base des données (L1) représentatives d'une frontière entre la terre et la mer, où le moyen de correction (21) établit les données de hauteur des points de division (T) situés dans la mer aux données de hauteur du niveau de la mer.

**2.** Système de construction de données topographiques selon la revendication 1, comprenant en outre: un moyen de constructions de données topographiques bidimensionnelles (21) pour construire des données topographiques bidimensionnelles à partir d'une image obtenue en imageant une carte (14).

**3.** Système de construction de données topographiques selon la revendication 1, comprenant en outre: un moyen de construction de données de motif de ligne de côte qui construit des données indiquant la frontière entre la terre et la mer à partir de l'image obtenue en imageant une carte.

**4.** Système de construction de données topographiques selon la revendication 1, dans lequel ladite fonction de nombre aléatoire est exprimée au moyen de l'équation qui suit :

$$b = \text{aléatoire gaussien } \frac{a+c}{2} k \cdot 2^{-ih}$$

où aléatoire gaussien représente un nombre aléatoire de distribution gaussienne, i représente le numéro de répétition de la division, k et h représentent des coefficients prédéterminés et a et c représentent l'altitude des points représentatifs adjacents (P).

**5.** Procédé pour construire des données topographiques tridimensionnelles sur la base de données topographiques bidimensionnelles (D2) et de données d'altitude (DH) qui sont construites sur la base des données topographiques bidimensionnelles, comprenant les étapes de :

(a) établissement (24) des données d'altitude (DH) pour une pluralité de points représentatifs optionnels (P) respectivement indiqués par lesdites données topographiques bidimensionnelles (22) ;

(b) établissement (21) de points de division (T) entre des points représentatifs adjacents (P) de la pluralité de points représentatifs (P) ;

(c) établissement (21) d'une déviation sur la base d'une distance depuis les points de division (T) jusqu'aux points représentatifs (P) adjacents aux points de division (T);

(d) construction de données de hauteur des points de division (T) en utilisant une fonction de nombre aléatoire sur la base de données de hauteur des points adjacents (T) et de la déviation ;

(e) correction (21) des données de hauteur des points de division (T) sur la base des données indiquant une frontière entre la terre et la mer, où le moyen de correction (21) établit les données de hauteur des points de division (T) situés dans la mer aux données de hauteur du niveau de la mer.

6. Procédé selon la revendication 5, caractérisé par la répétition depuis ladite étape (b) jusqu'à ladite étape (e) en utilisant lesdits points de division en tant que dits points représentatifs.

FIG.1

DISPLAY UNIT — 3

PICTURE CONVERSION UNIT — 12

TPPD MEM — 11

DVIE

SURFACE CONSTRUCTION UNIT — 21

TSD MEM — 25

A/D — 15

DS

DT

TP DB — 16

DP

SS

TV CMR — 13

14

TOPOGRAPHICAL PATTERN MAPPING UNIT — 4

T DB — 22

D2 D3

A DB — 23

DH

DS1

24

TOPOGRAPHICAL SURFACE CONSTRUCTION UNIT — 2

1

START — SP1

CONSTRUCT
COASTLINE
PATTERN DATA — SP2

INPUT
INITIAL DATA — SP3

CONSTRUCT
HIGHT DATA — SP4

DIVISION — SP5

SEA? — SP6

NO → HIGHT
≦ SEA LEVEL 0? — SP9

LOOP1

YES

NO

HIGHT
=SEA LEVEL 0 — SP7

YES

HIGHT
=SEA LEVEL 1 — SP10

NO ← DIVISION
COMPLETED? — SP8

LOOP2

YES

FINER
DIVISION — SP11

NO ← PIXEL
LEVEL? — SP12

YES

END — SP13

FIG.2

D2
TWO DIMENSIONAL
TOPOGRAPHICAL DATA

L1

FIG.3

PT

P

P

P

P

L1

FIG.4

P(i,j)　　T(i,j-1)　　P(i+1,j)　T(i+2,j-1)　　P(i+2,j)

T(i-1,j)　　　T(i,j)　　　T(i+1,j)　T(i+2,j)　　T(i+3,j)

P(i,j+1)　　T(i,j+1)　　P(i+1,j+1)　　　P(i+2,j+1)

T(i-1,j+1)　　T(i,j+2)　　T(i+1,j+2)　T(i+2,j+1)　T(i+3,j+2)

P(i,j+2)　　T(i,j+3)　　P(i+1,j+2)　T(i+2,j+2)　P(i+2,j+2)

T(i+2,j+3)

## FIG.5

T(i,j-1)

P(i+1,j)

P(i,j)

$\dfrac{a+c}{2}$

a

b

c

## FIG.6

FIG.7

FIG.8

FIG.9A

T4 ------- T12

T16  T17

T13  T15

T14

SEA LEVEL

T1  T2  T3

FIG.9B

T4 ------- T12

T1

T16  T17

T2  T3

T13 T14 T15

SEA LEVEL

COAST LINE

FIG.10

FIG.11

FIG.12

FIG.13

FIG.14

FIG .15

FIG.16

FIG.17

FIG.18